(19) **Europäisches Patentamt**
**European Patent Office**
**Office européen des brevets**

(11) **EP 2 413 398 B1**

(12) **EUROPEAN PATENT SPECIFICATION**

(45) Date of publication and mention
of the grant of the patent:
**01.05.2013 Bulletin 2013/18**

(51) Int Cl.:
*H01M 2/18* *(2006.01)*          *H01M 2/16* *(2006.01)*
*H01M 2/26* *(2006.01)*          *H01M 10/04* *(2006.01)*

(21) Application number: **11174812.5**

(22) Date of filing: **21.07.2011**

(54) **Prismatic secondary battery**

Prismatische Sekundärbatterie

Batterie secondaire prismatique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2010 JP 2010172302**

(43) Date of publication of application:
**01.02.2012 Bulletin 2012/05**

(73) Proprietor: **Sanyo Electric Co., Ltd.**
**Osaka 570-8677 (JP)**

(72) Inventors:
• **Maeda, Hitoshi**
**Moriguchi-shi, Osaka 570-8677 (JP)**
• **Fujiwara, Masayuki**
**Moriguchi-shi, Osaka 570-8677 (JP)**

• **Tani, Yuji**
**Moriguchi-shi, Osaka 570-8677 (JP)**
• **Kusukawa, Masao**
**Moriguchi-shi, Osaka 570-8677 (JP)**
• **Shinyashiki, Yoshitaka**
**Moriguchi-shi, Osaka 570-8677 (JP)**
• **Funahashi, Atsuhiro**
**Moriguchi-shi, Osaka 570-8677 (JP)**

(74) Representative: **Glawe, Delfs, Moll**
**Patent- und Rechtsanwälte**
**Postfach 26 01 62**
**80058 München (DE)**

(56) References cited:
**JP-A- 2002 270 239     JP-A- 2008 091 100**
**US-A- 5 455 125**

**Description**

TECHNICAL FIELD

The present invention relates to a prismatic secondary battery such as a lithium-ion battery, including a stack-type electrode assembly in which positive electrode plates and negative electrode plates are stacked with separators interposed therebetween.

BACKGROUND ART

In recent years, batteries have been used not only as power sources for devices such as mobile phones, notebook computers and PDAs, but also for those such as robots, electric vehicles and backup power sources. Thus, the demand for higher capacity batteries is growing. In response to such a demand, lithium-ion batteries are widely used as the driving power sources as described above because they have a high energy density and high capacity.

Lithium-ion batteries are roughly divided into two types: cylindrical batteries, in which a spiral electrode assembly is sealed in a cylindrical outer body with a base, and prismatic batteries, in which a stack-type electrode assembly formed by stacking a plurality of square electrode plates is sealed in a prismatic outer body with a base or a laminated outer body.

Battery packs having a plurality of battery cells connected in series and/or in parallel are used in high-power applications such as robots, electric vehicles, and backup power sources. In this case, it is necessary to increase power in a limited space. Therefore, prismatic batteries superior in energy density to cylindrical batteries are often used.

A stack displacement tends to occur when a stack-type electrode assembly for use in a prismatic battery is produced by stacking positive electrode plates and negative electrode plates with sheet-like separators interposed therebetween. If a stack displacement occurs, the cycle characteristics tend to be reduced because of lithium deposition at the end portions of the electrode plate, and short circuiting in the battery easily occurs because of the contact between the positive electrode plates and the negative electrode plates.

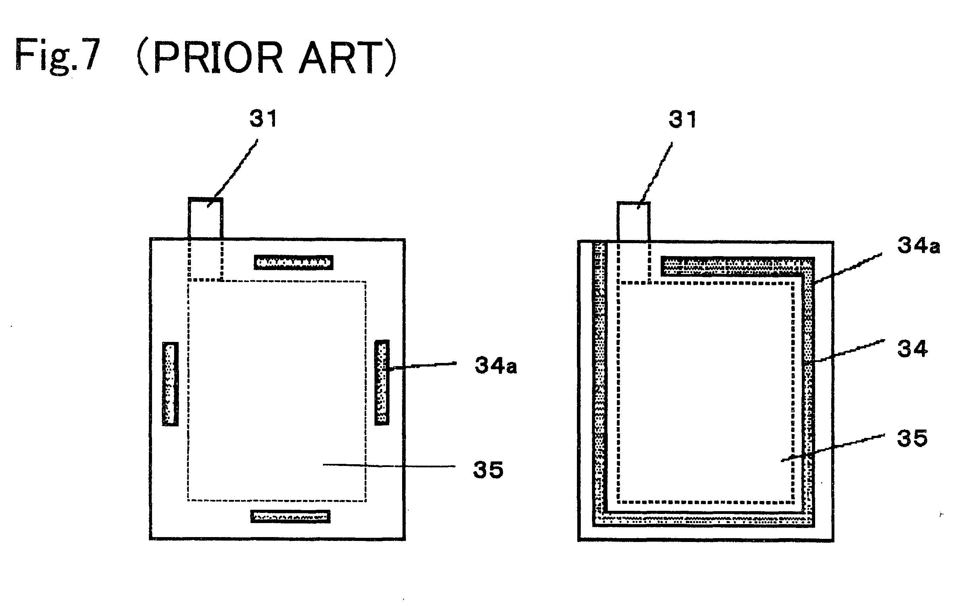

As shown in Fig. 7, it is proposed that a fused portion 34a is formed along four sides on the periphery of two superposed separators, so that the two separators are formed in a bag shape, and a positive electrode plate 35 is positioned in the bag-like separator (see JP-A-7-302616). This structure may prevent the positive and negative electrode plates from coming into direct contact with each other and thus prevent a short circuit in the battery to some extent.

However, the separators, which are usually made of polyolefin such as polyethylene or polypropylene, easily become wavy or warped when they are heat-sealed in the form of a bag. Such wavy or warped separators cause a stack displacement between positive electrode plates and negative electrode plates, and therefore, the stack-type electrode assembly cannot be produced accurately. As a result, the cycle characteristics cannot be improved, for example.

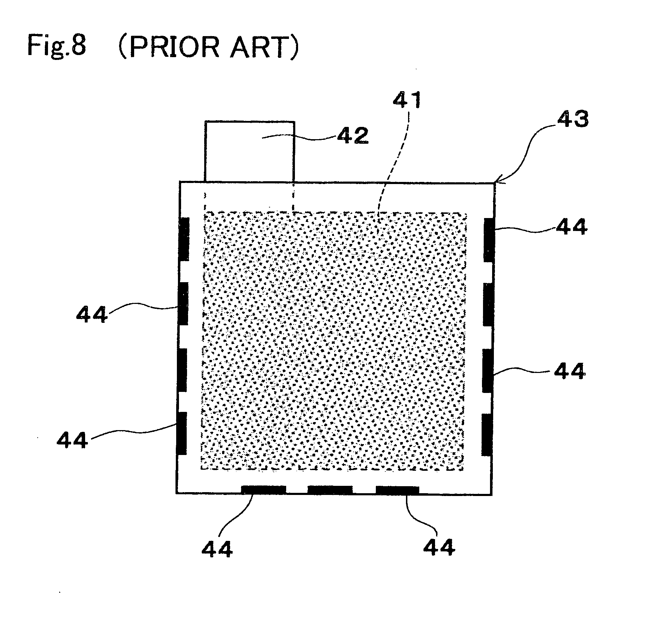

In view of the foregoing, as shown in Fig. 8, it is proposed that when two separators are shaped into a bag by forming fused portions 44 at a peripheral portion of the two separators, the peripheral portion of the separators is partially fused such that only three sides on the periphery are fused and a non-fused portion is left (see JP-A-2008-91100).

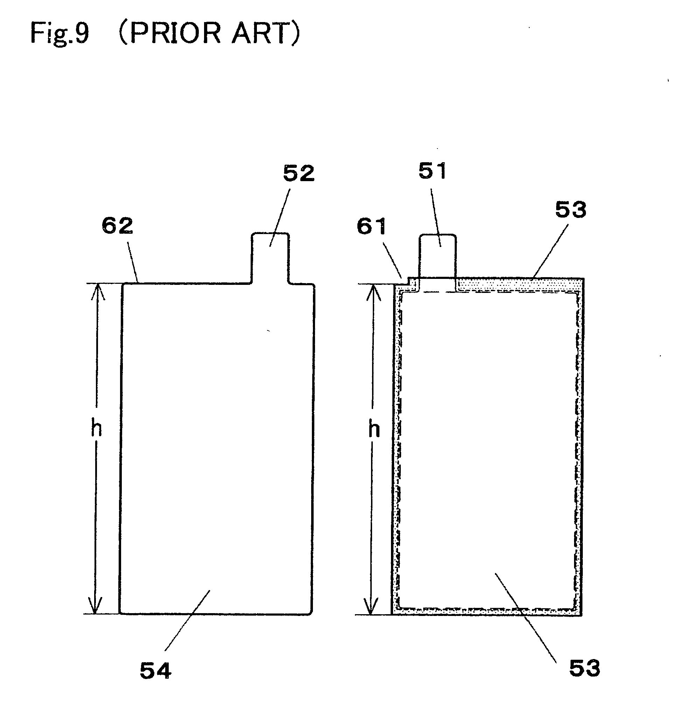

Furthermore, as shown in Fig. 9, it is proposed that, in order to accurately position a positive electrode plate and a negative electrode plate that oppose each other via a separator, an angled cut-away portion 61 is formed at at least one of corners at both ends of an opening 53 of a bag-like separator (see JP-A-2009-123582).

With a bag-like separator formed by joining all four sides on the periphery of two superposed separators as in JP-A-7-302616, the separator cannot be shrunk freely when it is heat-shrunk due to abnormal heat generation of the battery. As a result, when the separator is heat-shrunk, the vicinity of the joined portion of the separator comes into contact with the edge of the electrode plate arranged inside the bag-like separator, possibly resulting in a rupture of the separator.

On the other hand, with a bag-like separator formed by joining three sides on the periphery of two superimposed separators as in JP-A-2008-91100 and JP-A-2009-123582, when abnormal heat generation occurs in the battery, the separator is heat-shrunk in the direction vertical to the two opposing sides joined on the periphery of the bag-like separator, but cannot be shrunk freely. As a result, the separator may be ruptured. When the separator is heat-shrunk in the direction vertical to the non-joined side of the bag-like separator, the electrode plate may be exposed from the non-joined side of the bag-like separator, and the positive electrode plate and the negative electrode plate may come into contact with each other.

A battery with a bag-like seprarator is further disclosed in US 5 455 125.

SUMMARY

An advantage of some aspects of the invention is to provide a prismatic secondary battery in which short circuiting between positive electrode plates and negative electrode plates due to heat shrinkage of a separators or a rupture of a separator is prevented even when abnormal heat generation occurs in the battery.

According to an aspect of the invention, a prismatic secondary battery includes a stack-type electrode assembly in which square positive electrode plates each having a positive electrode collector tab and square negative electrode plates each having a negative electrode collector tab are stacked with separators interposed therebetween. The positive electrode plates or the negative electrode plates are arranged inside a bag-like separator. The bag-like separator is formed by joining two superposed sheets of square separators on three peripheral sides to be formed in a bag shape or by folding over one sheet of separator and joining two peripheral sides of the folded sheet excluding a folded portion thereof. The width of the bag-like separator that protrudes from an end portion of each electrode plate arranged inside the bag-like separator on a non-joined side of the bag-like separator is greater than the width of the bag-like separator that protrudes from an end portion of the electrode plate arranged, inside the bag-like separator on a joined side of the bag-like separator. The heat-shrinkage rate of the bag-like separator in a direction vertical to the non-joined side of the bag-like separator is greater than the heat-shrinkage rate of the bag-like separator in a direction parallel to the non-joined side of the bag-like separator. In this configuration, the heat-shrinkage rate of the bag-like separator is obtained when the bag-like separator is stored at 100 °C for 2.5 hours.

In the prismatic secondary battery according to the aspect of the invention, when the battery generates abnormal heat, the bag-like separator is less heat-shrunk in the direction vertical to the two opposing sides joined on the periphery of the bag-like separator, thereby preventing a rupture of the separator. The bag-like separator is heat-shrunk greatly in the direction vertical to the non-joined side. However, the electrode assembly arranged inside is not exposed even when the bag-like separator is heat-shrunk because the width of the bag-like separator that protrudes from the end portion of the electrode plate arranged inside the bag-like separator on the non-joined side of the bag-like separator is set to be large. Therefore, short circuiting between the opposing electrode plates is prevented.

Moreover, the volumetric energy density of the battery is not reduced since the width of the bag-like separator that protrudes from the end portion of the electrode plate arranged inside the bag-like separator on the joined side of the bag-like separator can be set to be small.

In the prismatic secondary battery, it is preferable that the collector tab of the electrode plate arranged inside the bag-like separator protrude from the non-joined side of the bag-like separator, and the stacked collector tabs of the electrode plates each arranged inside the bag-like separator protrude from one end portion of the stack-type electrode assembly.

In order to connect the stacked collector tabs to an electrode terminal, an extra space exists in the vicinity of the collector tabs inside the battery outer body. Therefore, the collector tab of the electrode plate arranged inside the bag-like separator is protruded from the non-joined side of the bag-like separator, and those collector tabs are stacked at one end of the stack-type electrode assembly, so that this space can be utilized effectively even when the portion protruding from the electrode plate on the non-joined side of the bag-like separator is set to be large. Accordingly, short circuiting between the positive electrode plates and the negative electrode plates due to heat shrinkage of the separator at the time of abnormal heat generation of the battery or a rupture of the separator is prevented without reducing the volumetric energy density of the battery.

In the prismatic secondary battery, it is preferable that the stacked positive electrode collector tabs and the stacked negative electrode collector tabs protrude from one end portion of the stack-type electrode assembly.

Moreover, the volumetric energy density of the battery can be increased since the stacked positive electrode collector tabs and the stacked negative electrode collector tabs protrude from one end portion of the stack-type electrode assembly.

In the prismatic secondary battery, it is preferable that the heat-shrinkage rate of the bag-like separator stored at 100 °C for 2.5 hours be 4% to 10% in the direction vertical to the non-joined side of the bag-like separator, and that the heat-shrinkage rate of the bag-like separator stored at 100 °C for 2.5 hours be 1% to 3% in the direction parallel to the non-joined side of the bag-like separator.

Accordingly, short circuiting between the positive electrode plates and the negative electrode plates due to heat shrinkage of the separator at the time of abnormal heat generation of the battery or a rupture of the separator can be prevented more reliably.

In the prismatic secondary battery, it is preferable that, on the non-joined side of the bag-like separator, the width of the bag-like separator that protrudes from an end portion of the electrode plate arranged inside the bag-like separator be larger by 3% or more than the length of the bag-like separator in the direction vertical to the non-joined side of the bag-like separator.

Accordingly, short circuiting between the positive electrode plates and the negative electrode plates due to heat shrinkage of the separator at the time of abnormal heat generation of the battery can be prevented more reliably.

In the prismatic secondary battery, it is preferable that the positive electrode plates be arranged inside the bag-like separator.

For smooth charging and discharging, the area of the negative electrode plates is preferably larger than the area of the positive electrode plates. Thus, the positive electrode plates are arranged inside the bag-like separator, and the outer size of the bag-like separator is set equal to the outer size of the negative electrode plates. Then, the bag-like separators and the negative electrodes are stacked to produce a stack-type electrode assembly. This provides a prismatic secondary battery that can be charged and discharged smoothly and with a higher volumetric energy density.

BRIEF DESCRIPTION OF THE DRAWINGS

The invention will be described with reference to the accompanying drawings, wherein like numbers reference like elements.

Fig. 1 is a perspective view of a prismatic lithium-ion battery according to an embodiment of the present invention.
Fig. 2 is a perspective view of a stack-type electrode assembly to be used in the prismatic lithium-ion battery according to the embodiment.
Fig. 3A is a plan view of a positive electrode plate to be used in the prismatic lithium-ion battery according to the embodiment, and Fig. 3B is a plan view of a negative electrode plate to be used in the prismatic lithium-ion battery according to the embodiment.
Fig. 4 is a perspective plan view of a bag-like separator having a positive electrode plate inside thereof to be used in the prismatic lithium-ion battery according to the embodiment.
Fig. 5 is a perspective plan view of a modification of the bag-like separator having a positive electrode plate inside thereof to be used in the prismatic lithium-ion battery according to the embodiment.
Fig. 6 shows a process of manufacturing the stack-type electrode assembly to be used in the prismatic lithium-ion battery according to the embodiment.
Fig. 7 shows a bag-like separator in related art.
Fig. 8 shows a bag-like separator in related art.
Fig. 9 shows a bag-like separator in related art.

DESCRIPTION OF EXEMPLARY EMBODIMENTS

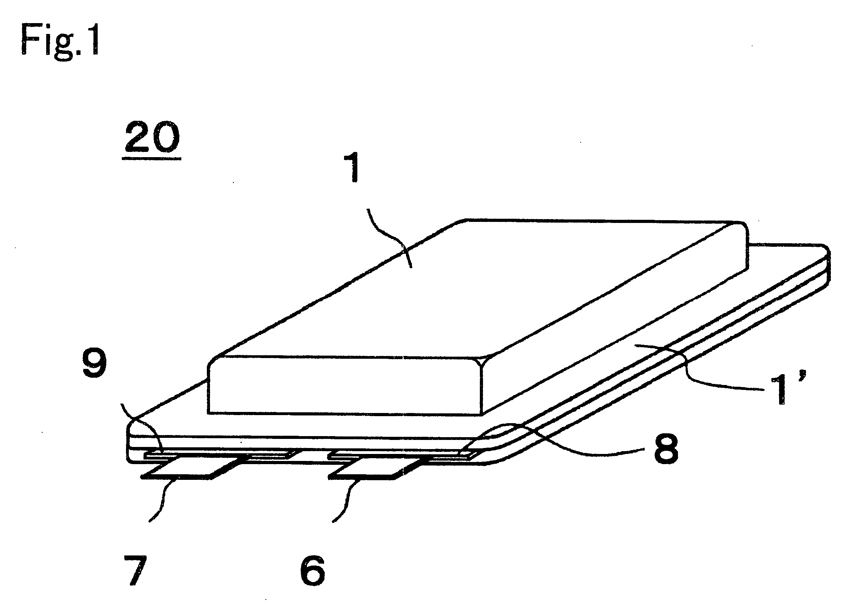

A prismatic lithium-ion battery serving as a prismatic secondary battery according to an embodiment of the invention will be described below based on Fig. 1 to Fig. 6. The prismatic secondary battery in the present invention is not limited to the embodiment below and may be modified as appropriate without departing from the spirit and scope of the invention.

First, a prismatic lithium-ion battery 20 according to the embodiment of the invention will be described using Fig. 1. As shown in Fig. 1, the prismatic lithium-ion battery 20 according to the embodiment of the invention includes a stack-type electrode assembly 10, which is accommodated together with electrolyte within a laminated outer body 1. A positive electrode terminal 6 and a negative electrode terminal 7 connected to a positive electrode collector tab 4 and a negative electrode collector tab 5, respectively, protrude from a welded seal portion 1' of the laminated outer body 1. At the welded seal portion 1' of the laminated, outer body 1, a positive electrode tab resin 8 is arranged between the positive electrode terminal 6 and the laminated outer body 1 and a negative electrode tab resin 9 is arranged between the negative electrode terminal 7 and the laminated outer body 1.

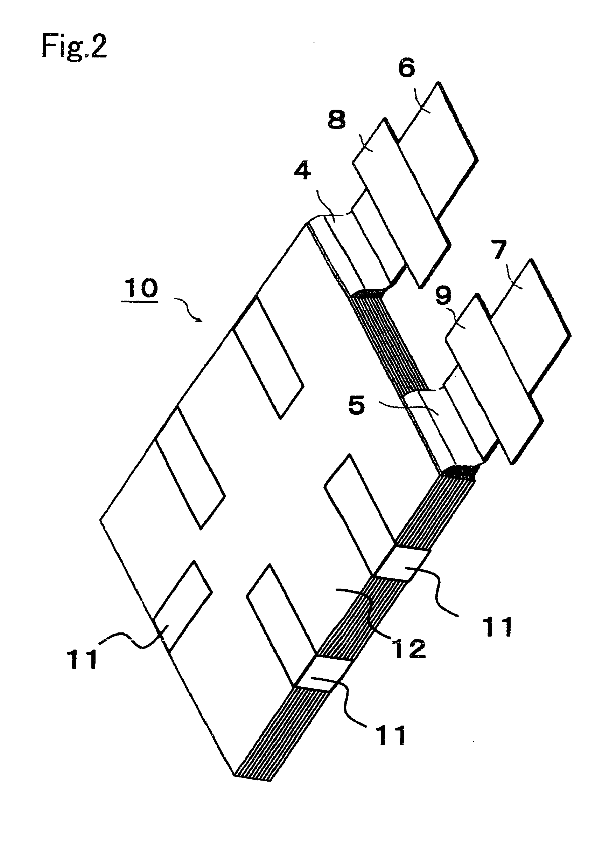

The stack-type electrode assembly 10 to be used in the prismatic lithium-ion battery 20 according to the embodiment of the invention will be described using Figs. 2 to 6. As shown in Fig. 2, the stack-type electrode assembly 10 accommodated within the laminated outer body 1 is formed by alternately stacking bag-like separators 13, each having a positive electrode plate 2 inside thereof, and negative electrode plates 3. The negative electrode plates 3 are arranged on both surfaces on the outermost sides of the stack-type electrode assembly 10. Insulating sheets 12 are additionally arranged on the outer surfaces of the outermost negative electrode plates 3 and fixed by insulating tape 11.

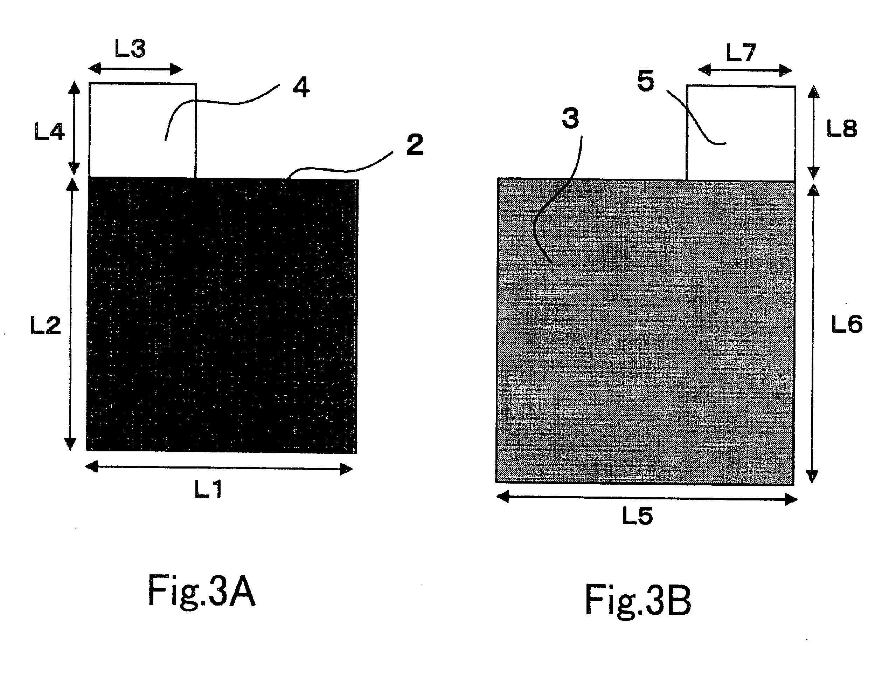

As shown in Fig. 3A, the positive electrode plate 2 has a positive electrode collector having positive electrode active material layers formed on both surfaces thereof. The positive electrode collector having no positive electrode active material formed thereon protrudes from one end portion of the positive electrode plate 2 to serve as the positive electrode collector tab 4. As shown in Fig. 3B, each negative electrode plate 3 has a negative electrode collector having negative electrode active material layers formed on both surfaces thereof. The negative electrode collector having no negative electrode active material formed thereon protrudes from one end portion of the negative electrode plate 3 to serve as the negative electrode collector tab 5.

According to the embodiment of the invention, part of the electrode collectors of the positive electrode plate 2 and the negative electrode plate 3 may be directly used as the positive electrode collector tab 4 and the negative electrode collector tab 5, as described above. Alternatively, a collector tab may be connected to each of the positive electrode plate 2 and the negative electrode plate 3.

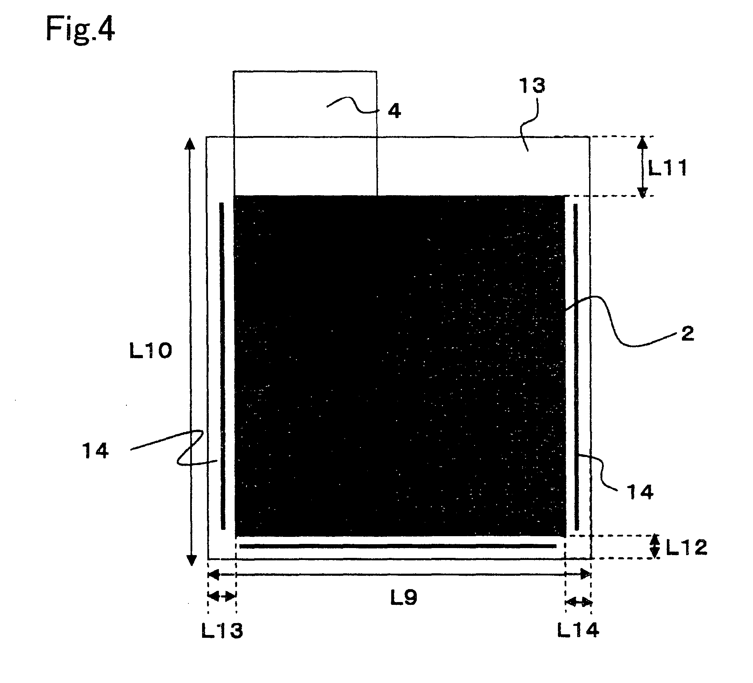

As shown in Fig. 4, the bag-like separator 13 having the positive electrode plate 2 inside thereof is formed by arranging sheet-like separators on both surfaces of the positive electrode plate 2 and joining the superposed separators by heat-sealing three peripheral sides. Welded portions 14 are formed at the heat-sealed portions of the separators.

The positive electrode collector tab 4 protrudes from the non-joined side of the superposed separators.

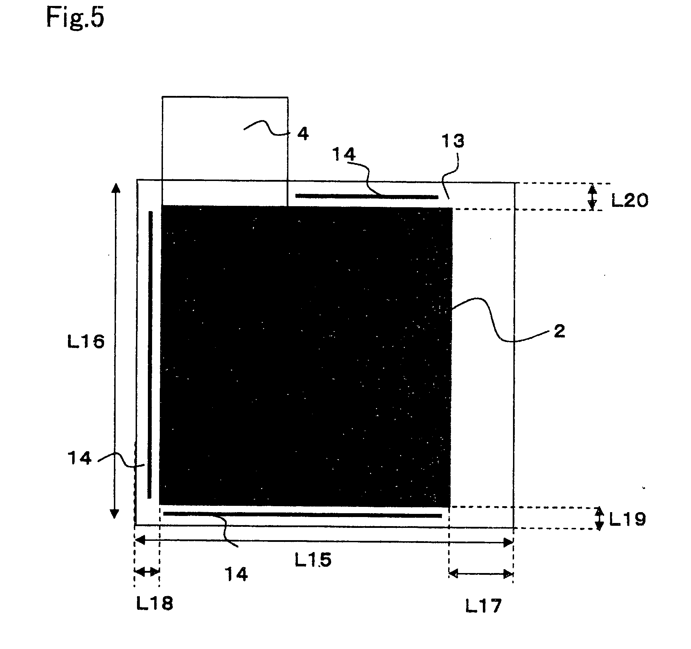

According to the embodiment of the invention, as shown in Fig. 5, the non-joined side of the bag-like separator 13 may be disposed in a direction different from the side from which the positive electrode collector tab 4 protrudes. In this case, a width L17 of the bag-like separator 13 that protrudes from an end portion of the positive electrode plate 2 on the non-joined side of the bag-like separator 13 is set to be greater than each of the widths L18, L19, and L20 of the bag-like separator 13 that protrude from the end portions of the positive electrode plate 2 on the joined sides of the bag-like separator 13. However, considering the volumetric energy density of the battery, the non-joined side of the bag-like separator 13 is preferably the side from which the positive electrode collector tab 4 protrudes.

The bag-like separator 13 may be manufactured by folding one sheet of rectangular separator down the middle and joining two sides on the periphery, excluding the folded side, to be formed in a bag shape. In this case, the folded side (folded portion) is not intended to be included in the non-joined side according to the embodiment of the invention.

According to the embodiment of the invention, a polyolefin separator is preferably used. The polyolefin separator is preferably formed of, for example, polypropylene (PP) or polyethylene (PE). A separator formed of a plurality of layers including a polypropylene (PP) layer and a polyethylene (PE) layer may be used.

According to the embodiment of the invention, the separators are not necessarily joined over the entire region on the joined side of the separators. As shown in Fig. 4, the welded portions 14 may not be provided at the corner regions of the bag-like separator 13. The welded portions 14 may be provided intermittently.

According to the embodiment of the invention, the method of joining the separators is not specifically limited, and the separators can be joined by heat-sealing or using an adhesive.

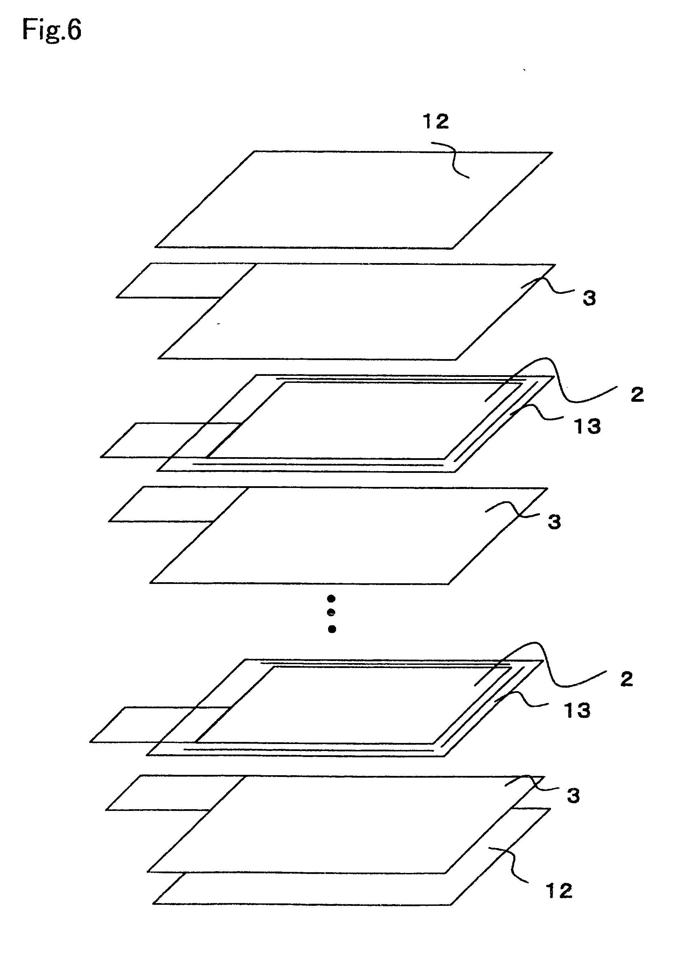

A method of manufacturing the stack-type electrode assembly 10 will be described using Fig. 6. The bag-like separators 13 each having the positive electrode plate 2 inside thereof and the negative electrode plates 3 are alternately stacked. Here, the positive electrode collector tabs 4 and the negative electrode collector tabs 5 are stacked such that the positive electrode collector tabs 4 and the negative electrode collector tabs 5 protrude in the same direction. The negative electrode plates 3 are arranged on the outermost sides in the stacking direction of the stack-type electrode assembly 10. The insulating sheets 12 are additionally arranged on the outer surfaces of the outermost negative electrode plates 3. The stack-type electrode assembly 10 is fixed by the insulating tape 11.

The stacked positive electrode collector tabs 4 and negative electrode collector tabs 5 are connected to the positive electrode terminal 6 and the negative electrode terminal 7, respectively, by ultrasonic welding.

The stack-type electrode assembly 10 is inserted between a sheet-like laminate film and a laminate film shaped like a cup so as to accommodate the stack-type electrode assembly 10. Three sides on the periphery are heat-sealed such that the positive electrode collector tabs 4 and the negative electrode collector tabs 5 protrude from the welded seal portion 1' of the laminated outer body 1. Then, after nonaqueous electrolyte is poured from a non-heat-sealed mouth portion of the laminated outer body 1, the mouth portion of the laminated outer body 1 is welded. The prismatic lithium-ion battery 20 is thus produced.

The method of manufacturing the prismatic lithium-ion battery according to the embodiment of the invention will be described using Example 1.

Example 1

Production of Positive Electrode Plate

Positive electrode slurry was prepared by mixing 90 mass % of $LiCoO_2$ serving as positive electrode active material, 5 mass % of carbon black serving as a conductive material, 5 mass % of polyvinylidene fluoride serving as a binding agent, and N-methyl-2-pyrrolidone (NMP) solution serving as a solvent. Then, the positive electrode slurry was applied to both surfaces of an aluminum foil (a thickness of 15 $\mu$m) serving as a positive electrode collector. Thereafter, the solvent was dried, and the resultant product was compressed by a roller to a thickness of 0.1 mm and then, cut into the positive electrode plate 2 to have a width (L1) of 85 mm and a. height (L2) of 85 mm and such that the aluminum foil having no positive electrode active material layer formed thereon (a width L3 of 30 mm and a height L4 of 20 mm) protruded from one side of the positive electrode plate 2 to serve as the positive electrode collector tab 4 (see Fig. 3A).

Production of Negative Electrode Plate

Negative electrode slurry was prepared by mixing 95 mass % of graphite powder serving as negative electrode active material, 5 mass % of polyvinylidene fluoride serving as a biding agent, and NMP solution serving as a solvent. The negative electrode slurry was applied to both surfaces of a copper foil (a thickness of 10 $\mu$m) serving as a negative electrode collector. Thereafter, the solvent was dried, and the resultant product was compressed by a roller to a thickness of 0.08 mm and the negative electrode plate 3 was cut to have a width (L5) of 90 mm and a height (L6) of 90 mm and such that the copper foil having no negative electrode active material layer formed thereon (a width L7 of 30 mm and a height L8 of 20 mm) protruded from one side of the negative electrode plate 3 to serve as the negative electrode collector tab 5 (see Fig. 3B).

Production of Bag-Like Separator Having Positive Electrode Plate Inside Thereof

Square separators made of polypropylene (PP) (each having a width L9 of 90 mm, a height L10 of 94 mm, and a thickness of 30 $\mu$m) were arranged on both sides of the positive electrode plate 2 produced by the method described above. Then, the separators were heat-sealed on three sides on the periphery from which the positive electrode collector tab 4 of the positive electrode plate 2 did not protrude. The bag-like separator 13 having the positive electrode plate 2 inside thereof was thus produced (Fig. 4).

On the heat-sealed sides of the separator, the widths (L12, L13, L14) of the separator that protruded from the end portions of the positive electrode plate 2 were 2.5 mm each. On the side from which the positive electrode collector tab 4 protruded (the non-heat-sealed side), the width (L11) of the separator that protruded from the end portion of the positive electrode plate 2 was 6.5 mm.

The heat-shrinkage rate of the separator was 4% in the direction in which the positive electrode collector tab 4 protruded (the direction vertical to the non-joined side of the bag-like separator 13). The heat-shrinkage rate of the separator was 2% in the direction vertical to the direction in which the positive electrode collector tab 4 protruded (the direction parallel to the non-joined side of the bag-like separator 13).

The heat-shrinkage rate above was obtained when the separator was heated and stored in a free state at 100 °C for 2.5 hours, and was determined, based on the length of the separator before heating and storage and the length of the separator after heating and storage, by the following equation:

$$\text{Heat-shrinkage rate} = [(\text{Length of the separator before heating and storage} - \text{Length of the separator after heating and storage}) / \text{Length of the separator before heating and storage}] \times 100.$$

Production of Battery

The stack-type electrode assembly 10 was produced by alternately stacking 36 negative electrode plates 3 and 35 bag-like separators 13 having the positive electrode plates 2 inside thereof, which were produced in the foregoing manner. The negative electrode plates 3 were arranged on the outermost sides in the stacking direction of the stack-type electrode assembly 10, and the polypropylene (PP) insulating sheets 12 were additionally arranged on the outer surfaces of the outermost negative electrode plates 3 and fixed by the insulating tape 11. The stacked positive electrode collector tabs 4, each being connected to each positive electrode plate 2, and the stacked negative electrode collector tabs 5, each being connected to each negative electrode plate 3, protrude from one end portion of the stack-type electrode assembly 10.

Thereafter, the aluminum positive electrode terminal 6 (having a thickness of 0.4 mm) was connected by ultrasonic welding to the stacked positive electrode collector tabs 4 protruding from one end portion of the stack-type electrode assembly 10. The copper negative electrode terminal 7 (having a thickness of 0.4 mm) was also connected by ultrasonic welding to the stacked negative electrode collector tab 5 protruding from one end portion of the stack-type electrode assembly 10. Here, the positive electrode tab resin 8 and the negative electrode tab resin 9 were adhered to those portions of the positive electrode terminal 6 and the negative electrode terminal 7, respectively, which were opposed to the laminated outer body 1. A three-layer film, formed of acid-modified polypropylene (a thickness of 30 $\mu$m) arranged on both surfaces of polyethylene naphthalate (a thickness of 12 $\mu$m), was used for each of the positive electrode tab resin 8 and the negative electrode tab resin 9.

The stack-type electrode assembly 10 was then inserted between a sheet-like laminate film and a laminate film shaped like a cup so as to accommodate the stack-type electrode assembly 10. Three sides on the periphery were heat-sealed such that the positive electrode terminal 6 and the negative electrode terminal 7 protruded from the laminated outer body 1.

After nonaqueous electrolyte was poured from the non-heat-sealed side of the laminated outer body 1, the mouth portion of the laminated outer body 1 was heat-sealed. The prismatic lithium-ion secondary battery 20 was thus produced. The nonaqueous electrolyte was prepared by dissolving $LiPF_6$ at a ratio of 1 M (mole/liter) in a solvent mixture of ethylene carbonate (EC) and methyl ethyl carbonate (MEC) at 30:70 by volume ratio.

Evaluation of Safety

For evaluation of safety, the following test was conducted on the prismatic lithium-ion battery 20 of Example 1. First, the prismatic lithium-ion battery 20 of Example 1 was charged under constant current and constant voltage, with IC-corresponding current of 8 A and at 4.2 V. Thereafter, a nail ($\phi$ 5 mm) was penetrated through the central portion of the battery at a speed of 10 mm/sec. As a result, although heat generation was observed, ignition, explosion, and similar problems did not occur in the prismatic lithium-ion battery 20 of Example 1.

Therefore, even when abnormal heat generation occurs in the prismatic lithium-ion battery 20 of Example 1, short circuiting between the positive and negative electrode plates due to a rupture or heat shrinkage of the separator is prevented, and ignition, explosion, and similar problems of the battery are prevented.

As described above, in the prismatic secondary battery according to the embodiment of the invention, short circuiting between the positive electrode plate and the negative electrode plate due to heat shrinkage of the separator or a rupture of the separator is prevented even when abnormal heat generation occurs.

**Claims**

1.   A prismatic secondary battery comprising:

a stack-type electrode assembly in which square positive electrode plates each having a positive electrode collector tab and square negative electrode plates each having a negative electrode collector tab are stacked with separators interposed therebetween,
the positive electrode plates or the negative electrode plates being arranged inside a bag-like separator, the bag-like separator being formed by joining two superposed sheets of square separators (13) on three peripheral sides to be formed in a bag shape or by folding over one sheet of separator (13) and joining two peripheral sides of the folded sheet excluding a folded portion thereof,
the width of the bag-like separator that protrudes from an end portion of each electrode plate arranged inside the bag-like separator on a non-joined side of the bag-like separator being greater than the width of the bag-like separator that protrudes from an end portion of the electrode plate arranged inside the bag-like separator on a joined side of the bag-like separator, and
the heat-shrinkage rate of the bag-like separator in a direction vertical to the non-joined side of the bag-like separator being greater than the heat-shrinkage rate of the bag-like separator in a direction parallel to the non-joined side of the bag-like separator.

2.   The prismatic sealed secondary battery according to claim 1, wherein the collector tab of the electrode plate arranged inside the bag-like separator protrudes from the non-joined side of the bag-like separator, and the stacked collector tabs of the electrode plates each arranged inside the bag-like separator protrude from one end portion of the stack-type electrode assembly.

3.   The prismatic secondary battery according to claim 2, wherein the stacked positive electrode collector tabs and the stacked negative electrode collector tabs protrude from one end portion of the stack-type electrode assembly.

4.   The prismatic secondary battery according to any one of claims 1 to 3, wherein the heat-shrinkage rate of the bag-like separator stored at 100 °C for 2.5 hours is 4% to 10% in the direction vertical to the non-joined side of the bag-like separator, and the heat-shrinkage rate of the bag-like separator stored at 100 °C for 2.5 hours is 1% to 3% in the direction parallel to the non-joined side of the bag-like separator.

5.   The prismatic secondary battery according to any one of claims 1 to 4, wherein on the non-joined side of the bag-like separator, the width of the bag-like separator that protrudes from an end portion of the electrode plate arranged inside the bag-like separator is larger by 3% or more than the length of the bag-like separator in the direction vertical to the non-joined side of the bag-like separator.

6.   The prismatic secondary battery according to any one of claims 1 to 5, wherein the positive electrode plates are arranged inside the bag-like separator.

# EP 2 413 398 B1

**Patentansprüche**

1. Prismatische Sekundärbatterie, die Folgendes umfasst:

   eine Elektrodeneinheit vom Stapeltyp, bei welcher viereckige positive Elektrodenplatten, die jeweils einen positiven Elektrodenkollektorstreifen aufweisen, und viereckige negative Elektrodenplatten, die jeweils einen negativen Elektrodenkollektorstreifen aufweisen, mit dazwischen angeordneten Separatoren gestapelt sind,
   wobei die positiven Elektrodenplatten oder die negativen Elektrodenplatten im Inneren eines beutelartigen Separators angeordnet sind, wobei der beutelartige Separator geformt ist durch Verbinden zweier übereinander gelegter Blätter viereckiger Separatoren (13) auf drei Randseiten, um in eine Beutelform geformt zu werden, oder durch Umfalten eines Blattes des Separators (13) und Verbinden zweier Randseiten des gefalteten Blattes unter Ausschluss eines gefalteten Teils davon,
   wobei die Breite des beutelartigen Separators, der von einem Endteil jeder Elektrodenplatte, die im Inneren des beutelartigen Separators angeordnet ist, an einer nicht verbundenen Seite des beutelartigen Separators größer ist als die Breite des beutelartigen Separators, die von einem Endteil der Elektrodenplatte, die im Inneren des beutelartigen Separators angeordnet ist, auf einer verbundenen Seite des beutelartigen Separators hervorsteht, und
   die Wärmeschrumpfrate des beutelartigen Separators in einer Richtung senkrecht zu der nicht verbundenen Seite des beutelartigen Separators größer ist als die Wärmeschrumpfrate des beutelartigen Separators in einer Richtung parallel zu der nicht verbundenen Seite des beutelartigen Separators.

2. Prismatische versiegelte Sekundärbatterie gemäß Anspruch 1, wobei der Kollektorstreifen der Elektrodenplatte, die im Inneren des beutelartigen Separators angeordnet ist, von der nicht verbundenen Seite des beutelartigen Separators herausragt und die gestapelten Kollektorstreifen der Elektrodenplatten, die jeweils im Inneren des beutelartigen Separators angeordnet sind, von einem Endteil der Elektrodeneinheit vom Stapeltyp hervorragen.

3. Prismatische Sekundärbatterie gemäß Anspruch 2, wobei die gestapelten positiven Elektrodenkollektorstreifen und die gestapelten negativen Elektrodenkollektorstreifen von einem Endteil der Elektrodeneinheit vom Stapeltyp hervorragen.

4. Prismatische Sekundärbatterie gemäß einem der Ansprüche 1 bis 3, wobei die Wärmeschrumpfrate des beutelartigen Separators, der bei 100 °C für 2,5 Stunden gelagert wird, 4 % bis 10 % in der Richtung senkrecht zu der nicht verbundenen Seite des beutelartigen Separators beträgt und die Wärmeschrumpfrate des beutelartigen Separators, der bei 100 °C für 2,5 Stunden gelagert wird, 1 % bis 3 % in der Richtung parallel zu der nicht verbundenen Seite des beutelartigen Separators beträgt.

5. Prismatische Sekundärbatterie gemäß einem der Ansprüche 1 bis 4, wobei an der nicht verbundenen Seite des beutelartigen Separators die Breite des beutelartigen Separators, die von einem Endteil der Elektrodenplatte, die im Inneren des beutelartigen Separators angeordnet ist, hervorsteht, um 3 % oder mehr größer ist als die Länge des beutelartigen Separators in der Richtung senkrecht zu der nicht verbundenen Seite des beutelartigen Separators.

6. Prismatische Sekundärbatterie gemäß einem der Ansprüche 1 bis 5, wobei die positiven Elektrodenplatten im Inneren des beutelartigen Separators angeordnet sind.

**Revendications**

1. Batterie secondaire prismatique comprenant :

   un ensemble d'électrodes de type empilé dans lequel des plaques d'électrode positive carrées ayant chacune une patte de collecteur d'électrode positive et des plaques d'électrode négative carrées ayant chacune une patte de collecteur d'électrode négative sont empilées avec des séparateurs interposés entre elles,
   les plaques d'électrode positive ou les plaques d'électrode négative étant agencées à l'intérieur d'un séparateur en forme de sac, le séparateur en forme de sac étant formé en joignant deux feuilles superposées de séparateurs (13) carrés sur trois côtés périphériques pour qu'ils soient mis sous la forme d'un sac ou en repliant une feuille de séparateur (13) et en joignant deux côtés périphériques de la feuille pliée à l'exclusion d'une partie pliée de celle-ci,
   la largeur du séparateur en forme de sac qui fait saillie d'une partie d'extrémité de chaque plaque d'électrode agencée à l'intérieur du séparateur en forme de sac d'un côté non joint du séparateur en forme de sac étant supérieure à la largeur du séparateur en forme de sac qui fait saillie d'une partie d'extrémité de la plaque d'électrode agencée à l'intérieur du séparateur en forme de sac d'un côté joint du séparateur en forme de sac, et le taux de retrait thermique du séparateur en forme de sac dans une direction verticale au côté non joint du séparateur en forme de sac étant supérieur au taux de retrait thermique du séparateur en forme de sac dans une direction parallèle au côté non joint du séparateur en forme de sac.

2. Batterie secondaire prismatique scellée selon la revendication 1, dans laquelle la patte de collecteur de la plaque d'électrode agencée à l'intérieur du séparateur en forme de sac fait saillie du côté non joint du séparateur en forme de sac, et les pattes de collecteur empilées des plaques d'électrode agencées chacune à l'intérieur du séparateur en forme de sac font saillie d'une partie d'extrémité de l'ensemble d'électrodes de type empilé.

3. Batterie secondaire prismatique selon la revendication 2, dans laquelle les pattes de collecteur d'électrode positive empilées et les pattes de collecteur d'électrode négative empilées font saillie d'une partie d'extrémité de l'ensemble d'électrodes de type empilé.

4. Batterie secondaire prismatique selon l'une quelconque des revendications 1 à 3, dans laquelle le taux de retrait thermique du séparateur en forme de sac stocké à 100 °C pendant 2,5 heures est de 4 % à 10 % dans la direction verticale au côté non joint du séparateur en forme de sac, et le taux de retrait thermique du séparateur en forme de sac stocké à 100 °C pendant 2,5 heures est de 1 % à 3 % dans la direction parallèle au côté non joint du séparateur en forme de sac.

5. Batterie secondaire prismatique selon l'une quelconque des revendications 1 à 4, dans laquelle, du côté non joint du séparateur en forme de sac, la largeur du séparateur en forme de sac qui fait saillie d'une partie d'extrémité de la plaque d'électrode agencée à l'intérieur du séparateur en forme de sac est supérieure de 3 % ou plus à la longueur du séparateur en forme de sac dans la direction verticale au côté non joint du séparateur en forme de sac.

6. Batterie secondaire prismatique selon l'une quelconque des revendications 1 à 5, dans laquelle les plaques d'électrode positive sont agencées à l'intérieur du séparateur en forme de sac.

Fig.1

EP 2 413 398 B1

Fig.2

EP 2 413 398 B1

Fig.3A

Fig.3B

# Fig.4

Fig.5

EP 2 413 398 B1

Fig.6

Fig.7 (PRIOR ART)

Fig.8 (PRIOR ART)

Fig.9 （PRIOR ART）

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7302616 A
- JP 2008091100 A
- JP 2009123582 A
- US 5455125 A